# EUROPEAN PATENT APPLICATION

(11) **EP 4 556 214 A1**
(43) Date of publication of application: **21.05.2025**
(21) Application number: 23210636.9
(22) Date of filing: 17.11.2023
(51) Int. Cl.: B32B 5/02, B32B 5/28, B32B 15/14, B32B 15/20, B32B 27/12, B32B 27/30, B32B 27/32, B32B 27/34, B32B 27/36, B32B 29/02, D04H 1/64, D21H 13/40

(54) **NONWOVEN WITH NEW THERMOPLASTIC BINDER**

(30) Priority: 15.11.2023 US 202318509609
(71) Applicant: Johns Manville, Denver, CO 80202 (US)
(72) Inventor: MILOAGA, Dana Gabriela, Lakewood, 80227 (US); KETZER, Michael, 97903 Collenberg (DE)
(74) Representative: Patentanwälte Olbricht Buchhold Keulertz

(57) **Abstract**

Provided is a laminate composite material, comprising a cover layer and at least one fiber nonwoven layer, comprising mineral fibers or thermoplastic fibers and 1 to 45 % by wt. of a thermoplastic binder composition to bond together the nonwoven web of fibers, a method for manufacturing the laminate composite material and an insulation product or panel comprising the same. The laminate composite material according to the invention has excellent surface aspect, good acoustic and thermal insulation properties, a good thermoforming and deep shaping performance, dimensional stability and sufficient stiffness at very low weights.

## Description

The invention relates to a new binder composition which is particularly suitable for the manufacture of composite materials utilizing such new binder composition in the required nonwoven materials. Composite materials using such new binder composition in their nonwoven part are suitable for composites materials as interior construction, linings, facer for Polyiso boards, floor coverings, and for the manufacture of furniture and similar products.

### BACKGROUND OF THE INVENTION

Composite materials are increasingly replacing traditional building materials as construction materials and must be adapted for manifold applications. Thus, on the one hand a sufficient mechanical stability is required and on the other hand a good workability and low weight are necessary and today sustainability combined with environmentally friendly aspects are important.

In particular, the combination of Aluminum sheets, with further materials like glass fiber nonwoven built by formaldehyde-based binder and later glued on is widely used and already known. US2018/0162102 A1 discloses a laminate structure comprising an aluminum layer, a glass composite layer and a carbon composite layer. The layers are bound by a thermoplastic resin preferably comprising polyetheretherketone (PEEK).

In another embodiment formaldehyde-based binder in a b-stage are built in paper layers or glass fiber nonwoven to generate so called decorative HPL respectively CPL or automotive parts or honeycomb boards. To this end, the materials are usually pressed or laminated and form a composite material. The selection and combination of the materials can improve the mechanical properties and at the same time a reduction, e.g. of the weight, can be achieved.

Aluminum paper/nonwoven composites are known from US2017/0328063 A1, wherein a laminate is comprising a non-woven fabric and a decorative paper that is impregnated with a melamine formaldehyde resin. HPL/ CPL laminates using formaldehyde binder/resins are known from WO2006111458A1 wherein the binder is selected from melamineformaldehyde, phenol-formaldehyde, urea-formaldehyde, epoxy resin, unsaturated polyesters, cross-linkable acrylic resin, polyurethane resin, an epichlorohydrin-polyaminopolyamide resin, an epichlorohydrin-polyamine resin, an epichlorohydrin-polyamide resin and mixtures thereof.

Even though the known technologies, including the aforementioned literature, provide already very good results in product performance and efficient manufacturing there is still a need for adaption to today's environmental requests and improvements. One of the main disadvantages in respect to existing reinforced wooden laminates is the still usual high amount of VOC(Volatile Organic Compounds) and particular often high amount of volatile formaldehyde, limited mechanical strength and complexity in production. In addition, the reinforcing glass nonwovens exhibit a rather restricting brittleness creating handling problems and dust during the manufacturing process and the subsequent lamination steps. For some applications a more flexible nonwoven product is desired.

It has now been found, that by using a specific binder composition for the reinforcing nonwoven components of such composite materials the aforementioned problems can be solved and more flexible and less brittle reinforcing nonwovens reduce the handling problems and dust formation during the manufacturing process and the subsequent lamination steps.

### SUMMARY OF THE INVENTION

The present invention relates to a laminate composite material comprising a new binder composition comprising (i) at least one polymer wax emulsion, preferably a thermoplastic emulsion, in particular the polymer wax emulsion being based on polyolefin and/or polyurethane and/or polyvinyl chloride (PVC) or polyethylene terephthalate (PET) or similar. Preferably, the emulsion is added to (ii) a base binder of polyvinyl alcohol or polyacrylate or polyvinyl acetate before the binder composition is applied to a textile nonwoven.

Such laminate composite materials exhibit increased flexibility and improved handling capabilities which is advantageous for the processing, e.g. into laminates.

The invention further relates to multilayer laminates comprising a laminate composite material that comprises the new binder composition. These laminates exhibit increased flexibility, improved impact resistance and offer additional advantages during processing. Such composite materials are particularly suitable for interior construction, for facers for Polyiso boards, linings, floor coverings, decorative layers for the manufacture of furniture or similar products. Through additives to the binder further functionalities are implied.

In accordance with another aspect of the invention, a method is provided for manufacturing a laminate composite material according to the invention.

### DETAILED DESCRIPTION OF THE INVENTION

Subject matter of the present invention is a new binder composition comprising (i) at least one polymer wax emulsion, preferably a thermoplastic emulsion, in particular the polymer wax emulsion is being based on polyolefin and/or polyurethane and/or PVC emulsions and/or PET or similar.

The above binder composition is applied to nonwoven fabrics which then can be used as semi-finished products for the production of laminates. The binder composition can also be applied during the manufacturing of the nonwoven fabric and can also be applied separately by a spray gun or bar on one side.

The term "dispersion" as used herein refers to a system consisting of several phases, one of which is continuous (dispersant) and at least one other is finely dispersed (dispersed phase, dispersant), a so called disperse system. Various forms of dispersion are e.g. emulsion, suspension, aerosol and foam.

The term "emulsion" as used herein refers to a disperse system with a liquid phase, the disperse phase, distributed in another liquid phase, the outer phase. An emulsion is a possible embodiment of a dispersion.

The term "suspension" as used herein refers to a mixture of a solid with a liquid. A suspension is another possible embodiment of a dispersion.

The laminate composite material according to the invention, comprises
- at least one cover layer and
- at least one fiber nonwoven layer, comprising mineral fibers and/or polymer fibers and 1 to 45 % by wt. of a thermoplastic binder composition to bond together the nonwoven web of fibers,
   characterized in that the thermoplastic binder composition comprises
      a) at least one aqueous polymer binder and
      b) 10 to 90 % by wt. of at least one polymer wax emulsion based on the total weight of the binder and
   the fiber nonwoven layer is pressed or laminated to the cover layer.

### Binder

The new thermoplastic binder composition contains at least one so called base binder. The binder composition comprises such base binder together with at least one polymer wax emulsion, preferably a thermoplastic emulsion, in particular based upon a polyolefin emulsion, or a polyurethane based emulsion or PVC emulsions or PET or similar. The polymer wax emulsion is preferably selected from the group consisting of polypropene wax emulsions (PP wax), polyethene wax emulsions (PE Wax), polyethylene terephthalate wax emulsions (PET Wax), polyurethane wax emulsions (PU Wax), polyacrylate wax emulsions and mixtures thereof. The polypropene wax and the polyethene wax may be oxidized polypropene wax or oxidized poylethylene wax.

The binder composition of the present invention can be applied to nonwoven fabrics which can be used for the manufacturing of composite materials and laminates. The binder composition can be applied during or after the forming of the nonwoven fabric. The binder composition is applied to the non-woven structure and then partly cured. The non-woven structure comprising the binder can then be processed into composites or laminates.

The thermoplastic binder composition comprises at least one aqueous polymeric binder base binder comprising polyvinyl acetate (PVAc), polyacrylate, polyvinyl alcohol (PVA), starch, sugar derivatives, lignin or mixtures thereof, preferably comprising at least one PVAc and/or at least one polyacrylate. Base binders are aqueous polymeric binder, preferably binders based on polyvinyl emulsions, polyacrylate emulsions, aqueous polymer dispersions based on vinyl acetate and their mixtures. Such binders are usually cured at temperatures of ca. 150°C - 250°C in one step.

The polymer wax emulsion is preferably selected from the group consisting of polyolefin wax emulsions, polypropene wax emulsions (PP wax), polyethene wax emulsions (PE Wax), polyethylene terephthalate wax emulsions (PET Wax), polyurethane wax emulsions (PU Wax), acrylic wax emulsions and mixtures thereof.

Preferably the thermoplastic binder composition comprises 25 to 90 % by wt. of a polyacrylate and/or PVAc based on the total weight of the binder, preferably 30 to 75 % by wt., more preferably 30 to 70 % by wt., more preferably 50 to 70 % by wt..

The binder composition may be present in the fiber nonwoven layer in a total amount of 10 to 80 % by weight of the total fiber nonwoven layer, preferably 5 to 40 % by wt..

In one embodiment the thermoplastic binder composition 25.- 90% of at least one aqueous polymer binder and 10 to 75 % by wt. of at least one polymer wax emulsion based on the total weight of the binder.

Preferably, the binder composition consists essentially of at least one base binder, as described above, and at least one polymer wax emulsion, preferably a thermoplastic emulsion, in particular the polymer wax emulsion is being based on polyolefin and/or polyurethane or PVC emulsions or PET emulsions or mixtures thereof. The thermoplastic polymer wax emulsion is chemically different from the base binder. Thermoplastic emulsions show a distinct 3-dimensional crosslinking compared to polyvinyl or acrylic in solution.

The polymer wax emulsion is added to the preferably aqueous base - binder before the application of the binder onto the non-woven structure.

The thermoplastic binder composition contains, at least 10% polymer wax emulsion, based on the total solid content of the binder composition, preferably up to a value of approximately 75%. The optimum value depending on the binder used. The thermoplastic binder composition comprises 10 to 70 % by wt., preferably 10 to 50 %, most preferably 20 % to 30 % by wt. of the polymer wax emulsion based on the total weight of the binder.

In general, most of the preferred polymer wax emulsions are commercially available. Examples are Byk Aquacer 1777, Byk Aquacer 1547 as well as the Addcomp products Priex 701, Priex 702 or Priex 703 (polypropylene emulsion). Other examples are PVC emulsions from Solvin NanoVin or styrene-acrylic emulsions from Lubrizol or PE emulsions from Michelman or EASTEK 1200 PET emulsion. Usually, such emulsions comprise additional components such as additives, emulsifiers, stabilizers, etc.

As discussed later the addition of the polymer wax emulsion, in particular for emulsion based on polyolefin and/or polyurethane, and/or PVC basis to the base binder induces multiple benefits and effects. Besides a higher flexibility of the nonwoven fabric and less brittleness and dust, laminates made with these nonwoven fabrics exhibit no or low VOC's, higher resistance when fire retardant additives used as second component. When using other emulsions similar effects can be observed regarding dust and brittleness. The polyolefin based polymer wax emulsion vary displays an excellent adhere to aluminum foils without using further binder saving process steps. This version also enables to connect to polyolefin based décor layers for decorative furniture end use. Variations of PVC, PET and other allow to specific lamination to chemical compatible décor layers: PET décor layers, PVC décor layers a.s.o. In combination with metal films it provides further decorative aspects.

In use as facers for polyiso boards the composite of glass fiber non-woven in combination with Aluminum thin foils offers gas tightness (keeping the pentane inside the foam cell) powering insulation performance up, increases the fire retardancy and physical improvement as impact e.g..

The above-mentioned base binders provide enough strength to generate the nonwoven out of staple fibers (binding forces) and enable processing in application processes. However, in order to ensure the required strengths in the further working of the nonwoven fabric other additional binders can also be introduced and/or known consolidation/mechanical strengthening methods, such as needling, can be used. In addition to the possibility of a mechanical strengthening, e.g., by calendaring or needling, in particular the hydrodynamic needling is also mentioned here. Chemical and/or thermoplastic binders are suitable as binders, as long they are compatible to the thermoplastic binder composition according to the present invention.

### Fiber layer

The fiber-forming materials for the nonwoven fabric are preferably natural fibers and/or fibers of synthesized or natural polymers, ceramic fibers, mineral fibers, such as glass fibers, that can also be used in the form of mixtures. The non-woven fabric can be formed of staple fibers or from filaments, that is, infinitely long fibers.

### Mineral- and ceramic fibers

The mineral- and ceramic fibers are preferably aluminosilicate fibers (glass fibers), ceramic fibers, dolomite fibers, wollastonite fibers or fibers of vulcanites, preferably basalt fibers, diabase fibers and/or melaphyr fibers. Daibases and melaphyrs are designated combined as paleobasalts and diabase is also often designated as greenstone.

The average length of the staple fibers in the non-woven fabric of mineral fibers used in accordance with the invention is between 8 and 30 mm, preferably 10 to 30 mm. In a further embodiment of the invention the mineral fiber non-woven fabric contains a mixture of endless fibers and staple fibers. The average fiber diameter of the mineral fibers is between 6 and 25 µm, preferably between 8 and 24 µm, especially preferably between 8 and 15 µm.

The weight per unit area of the nonwoven fabric of mineral fibers is between 15 and 500 g/m², preferably 30 and 250 g/m², wherein these data refer to a textile structure without any binders, additives or coatings.

### Glass Fibers

Glass fibers for the non-woven fabrics are particularly preferred. They are constructed from filaments, that is, infinitely long fibers or of staple fibers. The average length of the staple fibers is between 5 and 90 mm, preferably 8 to 30 mm. In a further embodiment of the invention the glass fiber non-woven fabric contains a mixture of endless fibers and staple fibers.

The mean diameter of the glass fibers is between 5 and 30 micron, preferably between 6 and 25 micron.

In addition to the previously cited diameters so-called glass microfibers can also be used. The preferred average diameter of the glass microfibers is between 0.1 and 5 µm. The microfibers forming the textile surface can also be present in mixtures with other fibers, preferably glass fibers. Moreover, a layer-shaped construction of microfibers and glass fibers is also possible.

The nonwoven fabric can also additionally have a reinforcement of fibers, threads or filaments. Reinforcement threads are preferably multi-filaments or rovings based on glass, polyester, carbon or metal. The reinforcement threads can be used as such or also in the form of a textile surface structure, e.g., as fabric, laying, knitted fabric, knitwear or non-woven fabric or scrims. The reinforcements preferably consist of a parallel thread sheet or of a laying.

The weight per unit area of the nonwoven fabric of glass fibers is between 15 and 500 g/m², preferably 40 and 250 g/m², wherein the data refers to a surface structure without any binders, additives or coatings.

Suitable glass fibers comprise - among others - those manufactured from A-glass, C-glass, E-glass, S-glass, T-glass or R-glass.

Preferably the fiber nonwoven layer comprises glass or polymer fibers or a mixture thereof, preferably glass fibers.

The fiber layer preferably comprises glass fibers having a mean diameter of between 6 micron and 25 micron and a length between 8 mm and 30 mm.

The fiber layer preferably has a thickness between 0.1 mm and 10 mm, preferably between 0.2 mm and 0.6 mm and an average weight of between 10 g/sqm and 300 g/sqm most preferably 20 g/sqm and 150 g/sqm.

The fibers nonwoven layer preferably comprises mineral fibers such as C-glass fibers, E-glass fibers, S-glass fibers, T-glass fibers, aluminosilicate fibers, ceramic fibers, dolomite fibers, wollastonite fibers or fibers of vulcanites, preferably basalt fibers, diabase fibers, melaphyr fibers, more preferably basalt fibers or a combination thereof, preferably C-glass, E-glass, S-Glass, T-Glass or a mixture therof.

### Polymer fibers

Among the nonwoven fabric of fibers of synthetic polymers, non-woven fabrics, especially so-called spun bonds, that is, spunbonded non-woven fabrics produced by a tangled deposit of melt-spun filaments are preferred. They consist of endless synthetic fibers of melt-spinnable polymer materials. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether- and keto groups such as, e.g., polyetherketones (PEK) and polyetheretherketone (PEEK), polyolefins such as, e.g., polyethylene or polypropylene, cellulose or polybenzimidazoles. In addition to the previously cited synthetic polymers, those polymers are also suited that are spun from solution.

The spunbonded non-woven fabrics preferably consist of melt-spinnable polyesters. In principle, all known types of polyester material suitable for the manufacture of fibers are considered as polyester material. Polyesters containing at least 95 mole % polyethyleneterephthalate (PET), especially those of unmodified PET, are especially preferable. When calandered Spunbond are made a spray gun and infra red dryer may installed.

If the composite materials in accordance with the invention should additionally have a flame-retardant action, it is advantageous if they were spun from polyesters modified in a flame-retardant manner. Such polyesters modified in a flame-retardant manner are known.

The individual titers of the polyester filaments in the spunbonded non-woven fabric are between 1 and 16 dtex, preferably 2 to 10 dtex.

In a further embodiment of the invention the spunbonded non-woven fabric can also be a bonded fiber fabric hardened by melt binder and which contains carrier fibers and melded fibers. The carrier fibers and melded fibers can be derived from any thermoplastic, fiber-forming polymers. Such spunbonded non-woven fabrics hardened by melt binder are described, e.g., in EP-A-0,446,822 and EP-A-0,590,629.

In addition to endless filaments (spunbond method) the textile surface can also be constructed of staple fibers or mixtures of staple fibers and endless filaments. The individual titers of the staple fibers in the non-woven fabric are between 1 and 16 dtex, preferably 2 to 10 dtex. The staple length is 1 to 100 mm, preferably 2 to 500 mm, especially preferably 2 to 30 mm. The nonwoven fabric can also be constructed of fibers of different materials in order to be able to achieve special properties.

The nonwoven fabric can also additionally have a reinforcement of fibers, threads or filaments. Multi-filaments or rovings based on glass, polyester, carbon or metal are preferred as reinforcement threads. The reinforcement threads can be used as such or also in the form of a textile surface structure, e.g., as fabric, laying, knitted fabric, knitwear or non-woven fabric. The reinforcements preferably consist of a parallel thread sheet or a laying.

The filaments and/or staple fibers constructing the bonded fiber fabric can have a practically round cross-section or also other forms such as dumbbell-shaped, kidney-shaped, triangular or tri- or multi-lobed cross-sections. Hollow fibers and bi-or multi-component fibers can also be used. Furthermore, the melded fibers can also be used in the form of bi-component or multi-component fibers.

The fibers forming the nonwoven fabric can be modified by customary additives, e.g., by antistatic agents such as carbon black.

The weight per unit area of the nonwoven fabric of fibers of synthetic polymers is between 10 and 500 g/m², preferably 20 and 250 g/m², wherein the data refers to a surface structure without any binders, additives or coatings.

### Natural fibers

The natural fibers are vegetable fibers, fibers derived from grasses, straw, wood, bamboo, reed and bast, or fibers of animal origin. Plant fibers is a collective concept and stands for seed fibers such as cotton, kapok or poplar fluff, bast fibers such as bamboo fiber, hemp, jute, linen or ramie, hart fibers such as sisal or manila, or fruit fibers such as coconut. Fibers of animal origin are wools, animal hairs, feathers and silks.

The weight per unit area of the nonwoven fabric of natural fibers is between 20 and 500 g/m², preferably 40 and 250 g/m², wherein the data refers to a surface structure without any binders, additives or coatings

### Natural polymer fibers

The textile surfaces of fibers of natural polymers are cellulose fiber such as viscose or vegetable or animal protein fibers.

Among the textile surfaces of cellulose fibers non-woven fabrics are especially preferred. They are constructed from filaments, that is, infinitely long fibers and/or from staple fibers. The average length of the staple fibers is between 1 and 25 mm, preferably 2 to 5 mm.

The average diameter of the cellulose fibers is between 5 and 50 µm, preferably between 15 and 30 µm.

The textile surface structure can also be Kraft papers, overlay papers, balance papers or decor papers. Such papers are particularly beneficial when used as core papers and / or as surface paper in CPL and HPL.

### Binder application

The application of the thermoplastic binder composition according to the present invention onto the nonwoven fibers can take place with the aid of all known methods. In addition to spraying on, impregnating and pressing in, the binder can also be applied by coating or by rotary nozzle heads. If following the inline process path binder composition according to the present invention can also be part of the white water or any other aqueous means used for the production of the nonwoven layer.

A further preferred method is the application of the new binder composition according to the present invention by the application of foam. In the application of foam binder foam is produced with the aid of a foaming agent in a foam mixer that is applied by suitable coating aggregates onto the non-woven fabric. The application can also take place here by rotary nozzle heads.

In the foam coating binder composition there are basically no limitations regarding the foaming agent. Preferred foaming agents are ammonium stearates or succinic acid esters added with 1% - 5% by weight in dry mass to the binder. Furthermore, the already described catalysts are mixed in if required. The solids content of the foam is at least 40%, preferably at least 50%.

The total binder content in the nonwoven fabric is between 10% and 80% based on total weight of the dried surface structure and includes all applied binder components and additives.

### Functional Materials

The composite material comprising the thermoplastic binder composition can contain additives and/or functional materials. The additives and functional material can be applied at the same time with the thermoplastic binder composition, e.g., as mixture or as individual components, or before or after the application of the binder composition. In as far as the thermoplastic binder composition is applied by foam application it is advantageous to apply the functional material with the foam or distributed in the foam or to apply the functional material onto the still fresh foam.

In order to fix the functional materials a binder can be additionally added for fixing the functional materials on the nonwoven fabric. The same binder composition is preferably selected here as is present in the textile surface structure. The content of functional material is determined by the subsequent use.

The application of the functional material used takes place as a function of the nature of the particular functional material by known techniques. The application can also take place by rotary nozzle heads.

The functional material is preferably flame proofing agents, materials for discharging electrostatic charges, materials for screening off electromagnetic rays, organic or inorganic pigments, especially colored pigments, materials that increase the resistance to wear and/or slippage, or decorative layers. The functional materials are preferably arranged on the side of the nonwoven fabric and can at least partially pass through the non-woven fabric.

In a variant of the method an additional binder is added to fix the functional materials on thenonwoven layer. The same binder (B-stage binder) as is present in the nonwoven layer is preferably selected here. The content of functional materials is determined by the subsequent use.

### Flame proofing agents

The flame proofing agents are inorganic flame proofing agents, organophosphorus flame proofing agents, nitrogen-based flame proofing agents or intumescences flame proofing agents. Halogenated (brominated and chlorinated) flame proofing agents can also be used but are less preferred on account of their risk evaluation. Examples for such halogenated flame proofing agents are polybrominated diphenylether, e.g., decaBDE, tetrabromobisphenol A and HBCD (hexabromocyclododecane).

The nitrogen-based flame proofing agents are melamines and urea. The organophosphorus flame proofing agents are typically aromatic and alkyl esters of phosphoric acid. TCEP (trischloroethylphosphate), TCCP (trischloropropylphosphate), TDCCP (trisdichloroisopropylphosphate), triphenylphosphate, trioctylphosphate (tris-(2-ethylhexyl) phosphate) are preferably used.

The inorganic flame proofing agents are typically hydroxides such as aluminum hydroxide and magnesium hydroxide, borates such as zinc borate, ammonium compounds such as ammonium sulfate, red phosphorus, antimony oxides such as antimony trioxide and antimony pentoxide and/or laminated silicates such as vermiculite. In addition, preferred agents are expandable graphite.

### Antistatic agents

Antistatic- and electromagnetic screening effects can be achieved by the use of agents for raising the electrical conductivity.

The antistatic agents are usually particles that are electrically conductive. Suitable materials are electrically conductive carbons such as carbon black, graphite and carbon nanotubes (C-nanotubes), conductive plastics or fibers of metal or metallic components.

### Electrically conductive materials

The materials for screening electromagnetic rays are usually electrically conductive materials. They can be built up in the form of foils, particles, fibers or wires and/or textiles surface structures of the previously cited materials.

### Fillers

Fillers are materials such as CaCO₃, coated CaCO₃, coated or uncoated Kaolin, talcum, gypsum or silica, etc.

### Pigments

The inorganic or organic pigments are particulate materials. In addition to fillers such as CaCOs, talcum, gypsum or silica, the pigments, to the extent that they should increase the value of the composite material, are in particular pigments that can be used in colors.

### Hydrophobic agents

Hydrohobic agents are additives which are able to increase or modify the compatibility of the B-stage binder composition to the carrier or the nonwoven fabric. Prominent but not limiting examples are fluorine or silane containing components which can greatly improve the compatibility of the binder to metal and glass surfaces.

### Decorative elements

The decorative layers are decorative elements. This is understood to include decorative layers and patterns that increase the value of the composite material. Examples of such patterns are veneers, cork, decorative papers, foils with wood graining, overlay papers, HPL, CPL (laminates built up in multilayers) or chips of paper or plastic with different colors that are also designated as decorative semifinished products. For their part, these decorative semifinished products can contain NW with new binders and/or one or more textile surfaces, preferably non-woven or non-woven fabric layers.

### Method of manufacturing a semi-finished composite material

Subject matter of the present invention is a method for the manufacture of a semi-finished composite material comprising the measures:
a) Supplying of a nonwoven fabric, whereas the nonwoven fabric optionally has received a pre-strengthening,
b) Application of at least one binder composition comprising (i) at least one base binder and (ii) at least one polymer wax emulsion, preferably a thermoplastic emulsion, in particular the emulsion is being based on polyolefin and/or polyurethane or PVC emulsions or PET,
c) Optionally applying at least one functional material to the nonwoven fabric according to b),
d) Drying the nonwoven fabric.

The nonwoven fabric in measure a) has preferred an additional pre-strengthening treatment as already described above. However, it is also possible to apply the binder composition according to the present invention to the nonwoven layer during its formation. In this so-called in-line process measures a) and b) step are carried out simultaneously at the same time during the formation of the nonwoven layer. The inline process does not necessarily require pre-strengthening means if the base binder composition itself can provide sufficient binding strength.

The application of the binder in step b) can be accomplished as described above. Optionally, functional materials can be applied. The functional materials can be applied together with the binder or after the application of the binder. The subsequent drying step removes the water and cures the base binder.

The temperature and duration of the drying step depends on the materials used, the process, and the planned applications. It is particularly important to set the temperature and drying duration according to the required degree of curing binder composition E.g. a polyolefin binder cures at 150 degree C and the base binder at 200 degree C.

The process results in a semi-finished product, comprising a nonwoven, thermoplastic binder composition according to the present invention, and optionally functional materials. The semi-finished product can be used for the manufacturing of laminates of all kind, in particular as reinforcement in laminates or as components of CPL or HPL, as facers and other materials.

### Semi finished product

### Decorative Semi-finished Product

Furthermore, the invention also comprises decorative semifinished products, in particular CPL and HPL, comprising:
a) at least one non-woven fabric, and
b) at least one binder composition comprising (i) at least one base binder and (ii) at least one polymer wax emulsion, preferably a thermoplastic emulsion, in particular the emulsion is being based on polyolefin and/or polyurethane or PVC emulsions or PET or similar, which is cured, and wherein the nonwoven fabric has optionally an additional strengthening, and
c) at least one decorative layer, preferably a layer or pattern of veneers, cork, decorative papers, foils with wood graining, overlay papers, High Pressure Laminate (HPL), Continuous Pressure Laminate (CPL) (laminates built up in multilayers), metal foils of Aluminum or Cuprum.

CPL and HPL typically consist of several, usually 2-50 layers of Kraft paper or nonwoven that are impregnated with a melamine, MUF or phenol B-stage binder and exhibit formaldehyde.

The CPLs and/or HPLs in accordance with the invention preferably have between 1 and 25 layers of a non-woven fabric with a B-stage binder. In addition, the CPLs and/or HPLs can have even more layers of Kraft paper impregnated with a melamineformaldehyde, melamine-urea-formaldehyde or phenol-formaldehyde resin.

Laminates and CPL or HPL in this case of invention resulting to improved flexibility and post-forming characteristics, in particular 3-dimensional forming capabilities. CPL or HPL can also comprise veneer layers.

The manufacture of the decorative semifinished product takes place by lamination under the action of pressure and heat in such a manner the layers are laminated together. The lamination can takes place by discontinuous or continuous pressing or by rolling. The parameters of pressure, temperature and dwell time are selected in accordance with the B-stage binder used.

The thermoplastic binder composition according to the invention increases the compatibility to the carrier materials, such as to WPC (wood plastic composites), plastics and metals.

### Laminates and composites

### Method of manufacturing composites

Subject matter of the present invention is a method for manufacturing a laminate composite material, wherein the method comprises the steps of
a. providing
   a.1. mineral fibers in an aqueous fiber slurry in a wet laid process onto a transport belt or
   a.2 providing PET fibers or mixtures of PET fibers with mineral fibers in an aqueous fiber slurry in a wet laid process onto a transport belt,
b. removing the white water at least partly,
c. applying a thermoplastic binder composition comprising at least one aqueous thermoplastic binder and 25 to 75 % by wt. of at least one polymer wax emulsion based on the total weight of the binder,
d. drying the resulting glass fiber nonwoven,
e. laminating a cover layer to the glass fiber nonwoven at a temperature of between 100 Celsius to 250 Celsius at a pressure of between 1 bar and 40 bar.

Preferably the thermoplastic binder composition in step c is applied by curtain coating or sprayed on one side.

Subject matter of the present invention is a method for the manufacture of a composite material comprising the measures:
a) Supplying of a carrier ( e.g. WPC),
b) Application of a nonwoven fabric onto at least one surface of the carrier, the nonwoven fabric having at least one binder composition comprising (i) at least one base- binder and (ii) at least one polymer wax emulsion, preferably a thermoplastic emulsion, in particular the emulsion is being based on polyolefin and/or polyurethane or PVC or PET or similar, which is cured, and wherein the nonwoven fabric has optionally an additional strengthening, and optionally at least one functional material,
c) Lamination of the construction obtained according to step b) under the action of pressure and heat,
d) optional application of at least one further protective layer and
e) drying.

The carrier used in accordance with step a) is preferably wooden materials like engineered wood, papers, cork, cardboards, mineral plates, wood-plastic-composites WPC and/or so-called honeycombs. Honeycombs are structural components with three-dimensional reinforcement structures that make possible an extraordinary stability and strength with low weight at the same time on account of their construction (bee honeycomb structure). Such honeycombs have been used for some time in many areas of application, among others also as inner reinforcement of plate-shaped elements in the construction area or in furniture. Also it includes facer materials for e.g. polyiso boards for building insulation applications

### Wooden carrier

The wooden materials are plate-shaped or strand-shaped wooden materials manufactured by mixing the different wooden particle forms with natural and/or synthetic binding agents during a hot pressing. The wooden materials used in accordance with the invention preferably comprise plywood or laminated wood, wood-chip material, especially chipboards and OSB (Oriented Strand Boards), wood fiber material, especially porous wood fiber boards, open-diffusion wood fiber boards, hard (high-density) wood fiber boards (HDF) and medium-density wood fiber boards (MDF), and Arboform. Arboform is a thermoplastically workable material of lignin and other wood components.

### Papers and cardboards

The papers are preferably papers on the basis of natural, synthetic, mineral or ceramic fibers or also of mixtures of these fiber types.

The cardboards are preferably cardboards on the basis of natural and/or synthetic fibers, which also comprise mineral and/or ceramic fibers as well as mixtures of these fiber types.

### Mineral plates

The mineral plates are preferably commercial mineral cardboard plates with cardboard coating on both sides, gypsum fiber plates, ceramic fiber plates, cement plates or lime plates. The plates can optionally be reinforced with natural and/or synthetic fibers, wherein these can also comprise mineral and/or ceramic fibers. The reinforcement fibers can be present in the form of filaments, monofilaments or as staple fibers.

In addition to the described materials the carrier can also consist of cork, veneer or other sustainable vegetable materials.

The carrier can also be a WPC (wood-plastic-composite), a foam or other plastic sheet materials. In the case of foam, the material needs to have enough strength to withstand the pressure during the laminating process.

The weight per unit area of the carriers contained in the composite material is a function of the final application and is not subject to any particular limitation.

The lamination of the construction obtained according to step b) takes place in step c) under the action of pressure and heat in such a manner that the binder present in the textile glues to. The lamination can take place by discontinuous or continuous pressing or by rolling. The parameters of pressure, temperature and dwell time are selected in accordance with binder types used.

The application of at least one further protective layer and its drying in accordance with step d) and may include lacquers such as powdered lacquers, clear lacquers or transparent lacquers, preferably scratch-proof lacquers that protect the functional layer against mechanical influences or against UV ageing.

The cover layer preferably comprises a metal layer or a plastic layer or a paper layer or a cardboard layer, preferably a metal foil, an aluminium foil or copper foil or plastic decor outer layer. The plastic decor layer can consist of PP, PA, PE, PET, PVC or combinations thereof.

Aluminium foil having a thickness of e.g. 2, 5, 10, 20,30, 50, 100, 200 µm can be used according to the targeted application, wherein thinner aluminum foils are targeted for low weight applications, wherein thickness between 30 to 100 or to 200 µm are targted for applications that require a more robust surface in handling or product applications in the construction industry.

Subject matter of the present invention further is an insulation product, comprising a polyurethane foam core or other chemical compatible foams and at least one laminate composite material according to the invention on at least one surface.

Subject matter of the present invention further is an insulation product comprising a mineral wool product and a laminate composite material according to the invention.

Subject matter of the present invention further is the use of a laminate composite material according to the invention in gypsum panels, in interior construction, as facers for polyiso boards, linings or floor coverings.

Subject matter of the present invention further is a Laminate composite material according to the invention forming a composite board or a decorative board or decorative laminate or a building membrane.

### Test methods

Air permeability: The air permeability is determined according to DIN EN ISO 9237. Area weight: The weight per unit area [area weight] is determined according to DIN EN 12127 / DIN EN ISO 29073-1.

Loss on ignition: The Loss on ignition (LOI) is determined according to ISO 1887. Thickness: The thickness is determined according to DIN EN ISO 9073-2 Tensile strength: The tensile strength (mechanical strength) is determined according to DIN EN 29 073-3

Specific tensile strength: The tensile strength is determined according to DIN EN 29 073-3. The specific tensile strength is calculated via the formula: (tensile strength in MD + tensile strength in CD) / ((loss on ignition/100) * area weight) [N/g LOI]. The specific tensile strength is the measured tensile strength of a sample in loading direction (MD, CD) of the load during mechanical stress testing divided by loss on ignition and multiplied with the area weight of such sample.

Specific Volume [cm³ /g]: To determine the specific volume of a sample area, the area weight of a respective sample according to the embodied examples was measured in accordance to DIN EN ISO 29073-1 (1992-08). Afterwards an LOI was performed to determine the binder amount and subtract the binder weight, thus obtaining the pure fiber weight plus aluminium foil weight of the sample. Based on these results the specific glass fiber volume of the mat was determined. The specific volume is indicative about the ability of the glass fiber to separate completely into individual fibers without fiber bundles and build a compact net of glass fibers without clumping and building agglomeration knots in the mat.
(i) Test pieces each having a size of 30 cm x 5 cm whose long side corresponded to the machine direction are collected from three points per 1 m positioned at equal intervals along the width direction.
(ii) Tensile tests were carried out at a clamping distance of 20 cm and a tensile rate of 10 cm/min using a constant speed elongation type tensile tester.
(iv) The strength at break was read and rounded to the nearest integer to determine the tensile strength (N/5cm).
(v) The tensile strength (N/5 cm) value obtained in the above (iv) is divided by the value of the weight per unit area (g/m²), and the resulting value is rounded to one decimal place to calculate the tensile strength per weight per unit area for each of the machine direction and the cross direction.

The tensile strength in the machine direction of the nonwoven layer for use in filters according to embodiments of the present invention was measure in machine direction (MD tensile strength) and in 90 degree to the machining direction (CD tensile strength). The machine direction refers to a sheet conveying direction during the manufacture of the nonwoven layer that is, the winding direction of the roll of the nonwoven layer fabric. The cross machine direction refers to a direction perpendicular to the sheet conveying direction during the manufacture of the nonwoven.

### Examples

An example of the invention is an aluminum lamination product comprising of 30% by weight thermoplastic binder and 70% by weight glass fiber. The weight % are calculated based on the final weight of the glass fiber non-woven layer comprising the binder, but without the weight of the aluminium foil. Aluminium foil thickness of 2, 5, 10, 20,30, 50, 100, 200 µm can be used according to the targeted application, wherein thinner aluminum foils are targeted for low weight applications, wherein thickness between 30 to 100 or to 200 µm are targted for applications that require a more robust surface in handling or product applications in the construction industry. In example 1 to example 11 an aluminum foil with a thickness of 2 µm was used. The binder was a mixture of a polypropylene wax emulsion and an PVAc based dispersion binder ( Celanese - Mowilith DN 60). For the lamination a press has been used at a temperature of 160 C and a low pressure of 20 bar for a time interval of 2 minutes.

In a first set of embodiments according to example 1 to example 11 different laminate composite materials were manufactured with the parameters and conditions listed in Table 1 and Table 2. The drying temperature was set to 160 C.

A laminate composite material was produced comprising an aluminium foil and a glass fiber nonwoven layer. The aluminium foil was a standard type for insulation with 2 micron thickness, respectively 5.4 g/m² specific weight.

The glass fiber nonwoven comprised 27 % to 31.4 % (measured by LOI) of a binder composition according to Table 1. In example 1 to example 11 according to Table 1 different binder compositions were applied to the laminate composite material.

According to example 1 to example 5 of the exemplary embodiments in Table 1 an anionic emulsion of an oxidized HDPE wax (Aquacer^{®} 1547) was dispersed in water and applied to the glass staple fiber web. Aquacer^{®} 1547 sold by BYK-Chemie GmbH is a HDPE-based wax emulsion, namely an anionic emulsion of an oxidized HD polyethylene wax. The non-volatile matter content at (60 min., 125 °C) is 35 % by weight. It forms a dispersion in water. The melting point of the wax content is 125 °C and the viscosity is 40 mPa·s at 23 °C and a stirring rate of D=400/s. The pH value is 9.7. Examples 1 to 5 are comparative examples as the binder composition only comprises a polymer wax emulsion but no additional binder component.

According to example 6 to example 11 of the exemplary embodiments in Table 1 the HOPE wax emulsion (Aquacer^{®} 1547) was mixed with an aqueous polyvinyl acetate emulsion (Mowolith^{®} DN 60) in different ratios and applied to the glass staple fiber web. Mowilith^{®} DN 60 is an aqueous polymer dispersion based on vinyl acetate and stabilized by polyvinyl alcohol sold by Celanese Sales Germany GmbH. Mowolith^{®} DN 60 has a solids content at (130 °C; 30 min - ISO 3251) of between 59 - 61 %. It has a Brookfield viscosity at (25 °C; 6/20 - ISO 2555) of between 10000 - 18000 mPa·s. The pH value is between 4.0 to 6.0 in a 1:1 water dilution. It has a glass transition temperature according to ISO 16805 of approx. 38°C.

The glass fibers nonwoven comprised between 80 % and 100 % of E- glass fibers having an average diameter of 12.5 micron and a length of 18 mm and between 20 % and 0 % of E- glass fibers having an average diameter of 11 micron and a length of 12 mm. Non woven fiber webs or mats with an area weight of between 40.5 g/m² to 152 g/m² were produced. The dry weight content of the binder in the manufactured nonwoven staple glass fiber mat was measured by loss on ignition (LOI) testing.

**Table 1: Composition of nonwoven layers binder and fiber, 1-5 comparative examples, 6-11 according to the invention and properties of the nonwoven layer**

| **Example No.** | **Binder composition** | **Glass fiber type First staple glass fibers** | **Glass fiber type Second staple glass fibers** | **Area weight [g/m²] Glass fiber non-woven with binder composition + aluminum foil** | **LOI [%]** |
|---|---|---|---|---|---|
| 1 | anionic emulsion of an oxidized HD polyethylene wax*/ Water 1:1 | 100% TRE | -- | 142 | 27 |
| | | 12,5/18 | | | |
| 2 | anionic emulsion of an oxidized HD polyethylene wax* / Water 1:1.5 | 100% TRE | -- | 152 | 28,5 |
| | | 12,5/18 | | | |
| 3 | anionic emulsion of an oxidized HD polyethylene wax*/ Water 1:1.5 | 80% TRE | 20% TRE | 145 | 28 |
| | | 12,5/18 | 11/12 | | |
| 4 | anionic emulsion of an oxidized HD polyethylene wax*/ Water 1:1.5 | 80% TRE | 20% TRE | 60,2 | 29,7 |
| | | 12,5/18 | 11/12 | | |
| 5 | anionic emulsion of an oxidized HD polyethylene wax* / Water 1:1.5 | 80% TRE | 20% TRE | 40,5 | 31 |
| | | 12,5/18 | 11/12 | | |
| 6 | aqueous polyvinyl acetate emulsion* 70%x/ anionic emulsion of an oxidized HD polyethylene wax* 30% | 80% TRE | 20% TRE | 61 | 29,8 |
| | | 12,5/18 | 11/12 | | |
| 7 | aqueous polyvinyl acetate emulsion* 70%x/ anionic emulsion of an oxidized HD polyethylene wax*30% | 80% TRE | 20% TRE | 61,2 | 31 |
| | | 12,5/18 | 11/12 | | |
| 8 | aqueous polyvinyl acetate emulsion⁺ 50%x/ anionic emulsion of an oxidized HD polyethylene wax*50% | 80% TRE | 20% TRE | 60,5 | 31,4 |
| | | 12,5/18 | 11/12 | | |
| 9 | aqueous polyvinyl acetate emulsion⁺ 50%x/ anionic emulsion of an oxidized HD polyethylene wax* | 80% TRE | 20% TRE | 61 | 31,2 |
| | | 12,5/18 | 11/12 | | |
| 10 | aqueous polyvinyl acetate emulsion* 30%x/ anionic emulsion of an oxidized HD polyethylene wax*70% | 80% TRE | 20% TRE | 60,6 | 31,5 |
| | | 12,5/18 | 11/12 | | |
| 11 | aqueous polyvinyl acetate emulsion⁺ 30%x/ anionic emulsion of an oxidized HD polyethylene wax*70% | 80% TRE | 20% TRE | 58,5 | 27,5 |
| | | 12,5/18 | 11/12 | | |

| | | | | | |
|---|---|---|---|---|---|
| **Aquacer 1547 from BYK-Chemie GmbH having 35* % *by wt. non volatile content* ⁺*Mowolith DN 60 from Celanese Sales Germany GmbH having 59 - 61* % *solid content* | | | | | |

The laminate composite material had the following properties listed in table 2.

**Table 2 Properties of laminate composite materials**

| | | *Tensile* | *Tensile Modulus* | *Air permeability [l*/*m²s]* | |
|---|---|---|---|---|---|
| **Example** | *Thickness [mm]* | *Modulus (CMD) [N*/*m²]* | *(MD) [N*/*m²]* | *Dried glass fiber mat* | *Spec. Vol.* [cm³ /g] |
| 1 | 1,27 | 315 | 336 | 1844 | 12.2 |
| 2 | 1,49 | 295 | 406 | 1688 | 13.7 |
| 4 | 0,63 | 325 | 376 | 2685 | 14.9 |
| 6 | 0,49 | 479 | 637 | 2189 | 11.4 |
| 8 | 0,5 | 464 | 586 | 2257 | 12 |
| 10 | 0,53 | 417 | 510 | 2738 | 12.8 |

Table 2 shows the specific volumes of glass fiber mat part in the laminate according to the examples in Table 2. The aluminum density is out of the scope of the following reasoning, as the aluminum density is constant for all samples and a constant part. Table 2 reflects an increase in the specific volume by adding a second type of shorter staple glass fiber. An increased specific volume is a desired glass fiber property as this value is related to the ability of the glass fibers to build a homogeneous glass fiber slurry without entanglements and without clogging. The fiber with higher specific volume shall show a better dispersion in the forming slurry.

The air permeability distribution of glass fiber mats according to the examples 6, 8 and 10 in table 2 shows an increasing air permeability in samples containing higher amount of polymer wax emulsion.

Table 2 illustrates the elastic modulus or in this case tensile modulus test data in machine direction (MD) and in cross machine direction (CMD) for the laminate composite material comprising different binder composition and distinct mixtures of E- glass fibers comprising an aluminum foil. The elastic modulus of the laminate is defined as the slope of its stress-strain curve during an elastic tensile deformation region. A stiffer material will have a higher elastic modulus.

As shown in the embodiments the tensile modulus (elastic modulus) of the laminate composite is lower in samples as to examples 1, 2 and 4 wherein the glass fiber was consolidated solely by the polymer wax emulsion.

The tensile modulus was between 295 [N/m²] and 325 [N/m²] in the cross direction (CMD) measurements in these embodiments.

An increase in tensile modulus (CMD) at about 52 % could be observed in example 6 (Mowolith DN 60 70%x / Aquacer 1547 30%) compared to example 1 (Aquacer 1547 / Water 1:1). The vinyl acetate polymer dispersion creates a stronger consolidation and binding within the glass fiber web and thus higher e-modules. The tensile modulus decreased at higher polymer wax emulsion contents in the binder.

Therefore, a binder composition comprising both an aqueous polymeric binder and a polymer wax emulsion will result in a laminate with high mechanical strength and elasticity.

Specific details are given in the description to provide a thorough understanding of the embodiments. However, it will be understood by one of ordinary skill in the art that the embodiments may be practiced without these specific details. For example, well-known materials and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

## Claims

1. Laminate composite material, comprising
- at least one cover layer and
- at least one fiber nonwoven layer, comprising mineral fibers and/or polymer fibers and 1 to 40 % by wt. of a thermoplastic binder composition to bond together the nonwoven web of fibers,
**characterized in that** the thermoplastic binder composition comprises
(i) at least one aqueous polymer binder and
(ii) 10 to 90 % by wt. of at least one polymer wax emulsion based on the total weight of the binder and
the fiber nonwoven layer is pressed or laminated to the cover layer.

2. Laminate composite material according to claim 1, wherein the thermoplastic binder composition comprises at least one aqueous polymer binder comprising a polyvinyl acetate (PVAc) and/or a polyacrylate and/or a polyvinyl alcohol (PVA) and/or a starch and/or a sugar derivative or lignin, preferably comprising PVac and/or polyacrylate.

3. Laminate composite material according to claim 2, wherein the fiber nonwoven layer is comprising glass or polymer fibers or polymer filaments or mixture thereof, preferably glass fibers or polymer filaments.

4. Laminate composite material according to any of claim 1 to claim 3, **characterized in that** the thermoplastic binder composition comprises 10 to 70 % by wt., preferably 10 to 50 %, most preferably 20 % to 30 % by wt. of a polymer wax emulsion based on the total weight of the binder.

5. Laminate composite material according to one of the preceding claims, **characterized in that** the polymer wax emulsion is selected from the group consisting of polypropene wax emulsions (PP wax), polyethene wax emulsions (PE Wax), polyethylene terephthalate wax emulsions (PET Wax), poly urethane wax emulsions (PU Wax), acrylic wax emulsions and mixtures thereof.

6. Laminate composite material according to one of the preceding claims, **characterized in that** the thermoplastic binder composition comprises 10 to 75 % by wt. of a polyacrylate and/or PVAc and/or POH binder based on the total weight of the binder, preferably 20 to 75 % by wt., more preferably 30 to 70 % by wt..

7. Laminate composite material according to one of the preceding claims, **characterized in that** the binder composition is present in the fiber nonwoven layer in a total amount of 10 to 80 % by weight of the total fiber nonwoven layer, preferably 5 to 40 % by wt..

8. Laminate composite material according to one of the preceding claims, wherein the cover layer comprises a metal layer or a plastic layer or a paper layer or a cardboard layer, preferably a metal foil, an aluminium foil or copper foil or plastic decor outer layer.

9. Laminate composite material according to claim 8, wherein the pastic layer or the plastic decor layer consists of PP, PA, PE, PET, PVC or combinations thereof.

10. Laminate composite material according to one of the preceding claims, **characterized in that** the fiber layer comprises glass fibers having a mean diameter of between 6 micron and 25 micron and length between 8 mm and 30 mm or PET fibers of 2-16 micron at length of 6mm- 20mm or PET endless filaments of 3 dtex to 15 dtex or mixtures therof.

11. Laminate composite material according to one of the preceding claims, **characterized in that** the fiber layer has a thickness between 0.1 mm and 10 mm, preferably between 0.2 mm and 0.6 mm and an average weight of between 10 g/sqm and 300 g/sqm most preferably 20 g/sqm and 150 g/sqm.

12. Laminate composite material according to one of the preceding claims, **characterized in that** the fibers nonwoven layer comprises mineral fibers such as C-glass fibers, E-glass fibers, S-glass fibers, T-glass fibers, aluminosilicate fibers, ceramic fibers, dolomite fibers, wollastonite fibers or fibers of vulcanites, or a combination thereof, preferably C-glass, E-glass, S-Glass, T-Glass or a mixture therof.

13. Laminate composite material according to one of the preceding claims, **characterized in that** the thermoplastic binder composition further comprises at least one additive, and/or functional material, preferably selected from the group of fire retardants, flame proofing agents, materials for discharging electrostatic charges, materials for screening off electromagnetic rays, organic or inorganic pigments, and materials that increase the resistance to wear and/or slippage.

14. Method for manufacturing a laminate composite material according to one of the preceding claims, wherein the method comprises the steps of
a. providing
a.1 mineral fibers in an aqueous fiber slurry in a wet laid process onto a transport belt or
a.2 providing PET fibers or mixtures of PET fibers with mineral fibers in an aqueous fiber slurry in a wet laid process onto a transport belt,
b. removing the white water at least partly,
c. applying a thermoplastic binder composition comprising at least one aqueous thermoplastic binder and 25 to 75 % by wt. of at least one polymer wax emulsion based on the total weight of the binder,
d. drying the resulting fiber nonwoven,
e. laminating a cover layer to the fiber nonwoven at a temperature of between 100 Celsius to 250 Celsius at a pressure of between 1 bar and 40 bar.

15. Method according to claim 14, wherein the thermoplastic binder composition in step c is applied by curtain coating or sprayed on one side.

16. Insulation product, comprising a polyurethane foam core or other chemical compatible foams and at least one laminate composite material according to claims 1 - 13 on at least one surface.

17. Insulation product comprising a mineral wool product and a laminate composite material according to claims 1-13.

18. Use of a laminate composite material according to claims 1-13 in gypsum panels, in interior construction, as facers for polyiso boards, linings, floor coverings, or as decorative layers.

19. Laminate composite material according to claim 1 forming a composite board or a decorative board or decorative laminate or a building membrane.
